# EUROPÄISCHE PATENTANMELDUNG

(11) **EP 1 146 270 A2**
(43) Veröffentlichungstag der Anmeldung: **17.10.2001**
(21) Anmeldenummer: 01108341.7
(22) Anmeldetag: 03.04.2001
(51) Int. Cl.: F16K 41/10

(54) **Hubventil mit einer von einem Balg umgebenen Ventilstange**

(30) Priorität: 10.04.2000 DE 20006594 U
(71) Anmelder: Kieselmann GmbH, 75438 Knittlingen (DE)
(72) Erfinder: Weimer, Dieter, 75015 Bretten (DE); Blechner, Thomas, 76137 Karlsruhe (DE)
(74) Vertreter: Twelmeier, Ulrich, Dipl.Phys.

(57) **Zusammenfassung**

Beschrieben wird ein Hubventil
mit einem Ventilgehäuse (1) mit einer Eintrittsöffnung (3) und mit einer Austrittsöffnung (2) und mit einer zwischen der Eintrittsöffnung (3) und der Austrittsöffnung (2) angeordneten Sitzfläche (4), welche mit einem Verschlußteil (5) zusammenwirkt, an welchem zu seiner Betätigung eine Ventilstange (6) befestigt ist, welche durch eine der Eintrittsöffnung (3) gegenüberliegende Antriebsöffnung (7) des Ventilgehäuses (1) aus diesem austritt und mit einem Stellantrieb (8) verbunden ist,
und mit einem Balg (17), insbesondere als Faltenbalg oder Wellrohr ausgebildet, welcher aus einem Kunststoff hergestellt ist, die Ventilstange (6) umschließt, mit seinem einen Ende vom Verschlußteil (5) ausgeht und an seinem anderen Ende in einen Flansch (18) übergeht,
welcher einerseits mit einem radial außen liegenden Ringabschnitt (21) zur Abdichtung der Antriebsöffnung (7) zwischen einer an der Antriebsöffnung (7) ausgebildeten konischen Ringsitzfläche (19) und einem Druckring (20) eingespannt ist, welcher in die Antriebsöffnung (7) eingesetzt ist,
und welcher andererseits an einem radial weiter innen liegenden Abschnitt (32) axial unverschieblich an dem Druckring (20) gehalten ist. Erfindungsgemäß ist vorgesehen, daß der Flansch (18) wenigstens in seinem eingespannten Ringabschnitt (21) aus einem Kunststoff besteht, welcher als Füllstoff ein anorganisches Pulver enthält, dessen Teilchen eine Blattstruktur haben.

## Beschreibung

Die Erfindung geht aus von einem Hubventil mit den im Oberbegriff des Anspruchs 1 angegebenen Merkmalen.

Aus der DE 32 15 799 C2 ist ein Hubventil bekannt mit einem Ventilgehäuse mit einer Eintrittsöffnung und mit einer Austrittsöffnung und mit einer zwischen der Eintrittsöffnung und der Austrittsöffnung angeordneten Sitzfläche, welche mit einem Verschlußteil zusammenwirkt, an welchem zu seiner Betätigung eine Ventilstange befestigt ist, welche durch eine der Eintrittsöffnung gegenüberliegende Antriebsöffnung des Ventilgehäuses aus diesem austritt und mit einem Stellantrieb verbunden ist, welcher ein mit dem Ventilgehäuse verbundenes Gehäuse hat. In diesem bekannten Ventil umschließt ein Faltenbalg aus PTFE die Ventilstange. Der Faltenbalg geht mit seinem einen Ende von dem Verschlußteil aus, mit welchem er einstückig verbunden ist, und geht an seinem anderen Ende in einen Flansch über, welcher mit einem radial außen liegenden Ringabschnitt zur Abdichtung der Antriebsöffnung zwischen einer an der Antriebsöffnung ausgebildeten konischen Ringsitzfläche und einem ringförmigen Fortsatz einer Laterne eingespannt ist, welche sich zwischen dem Ventilgehäuse und dem Gehäuse des Stellantriebes befindet und in Verbindung mit dem Faltenbalg die Antriebsöffnung des Ventilgehäuses dicht verschließt. Um die Druckfestigkeit des PTFE an der Einspannstelle des Flansches des Faltenbalges zu erhöhen, ist der Flansch mit Glasfasern verstärkt. Trotz der Glasfaserverstärkung besteht bei dem bekannten Hubventil die Gefahr, daß infolge eines unvermeidlichen Kriechens und Schrumpfens des PTFE unter Druck und Wärmeeinwirkung an der Einspannstelle des Flansches Undichtigkeiten entstehen können, die einen frühzeitigen Austausch der aus dem Schließglied und dem Faltenbalg gebildeten Baueinheit erzwingen. Das Auftreten von Undichtigkeiten wird dadurch gefördert, daß beim Öffnen und insbesondere beim Schließen Biegekräfte auf den Flansch des Faltenbalgs einwirken, welche sich auf den Dichtspalt zwischen dem Flansch und der mit ihm zusammenarbeitenden Ringsitzfläche des Ventilgehäuses auswirken. Um dem zu begegnen, ist bei dem bekannten Hubventil der Flansch dick ausgebildet, damit er biegesteif ist. Das hat jedoch den Nachteil, daß sich an der Einspannstelle des Flansches eine große Menge PTFE befindet, welche kriechen und schrumpfen kann und dadurch die Gefahr einer Undichtigkeit erhöht.

Hubventile der beschriebenen Art werden vorwiegend in der pharmazeutischen Industrie und in der Lebensmittelindustrie eingesetzt. Dort kommt es auf äußerste Sauberkeit und Dichtigkeit des Hubventils an. Aus diesem Grund werden die Hubventile und die Rohrleitungen, in welchen sie sich befinden, regelmäßig gründlich gereinigt, wozu aggressive Reinigungsmittel, zum Teil sogar Königswasser, verwendet wird. Die aggressiven Reinigungsmittel können Glasfaseranteile aus dem PTFE herauslösen, wobei dieses dadurch begünstigt wird, daß Glasfasern mit einem Ende in einer Oberfläche des Flansches liegen können und das Reinigungsmittel entlang der Glasfasern in den Flansch eindringen kann. Hinzu kommt, daß Glasfasern bei Biegebeanspruchung des Flansches infolge ihrer Sprödigkeit brechen. In der pharmazeutischen Industrie werden Hubventile mit glasfaserverstärktem PTFE - Faltenbalg deshalb nicht akzeptiert, so daß dort derzeit Faltenbälge aus unverstärktem PTFE eingesetzt werden. Das wiederum verschlimmert die Gefahr von Undichtigkeiten durch Kriechen und Schrumpfen des PTFE.

Um dem zu begegnen, offenbart die DE 198 47 294 C2 ein Hubventil mit den Merkmalen des Oberbegriffs des Anspruchs 1, in welchem zur Erhöhung der Dichtigkeit der Einspannstelle des Flansches zwei Maßnahmen in Kombination angewendet werden. Zum einen wird der Flansch mit seinem radial innen liegenden Abschnitt an einem Druckring verankert, mit welchem zugleich der radial außen liegende Abschnitt des Flansches eingespannt wird. Auf diese Weise werden beim Betätigen des Ventils keine Biegemomente mehr in die radial außen liegende Einspannstelle des Flansches eingeleitet. Zugleich kann dadurch der Flansch an der Einspannstelle dünner ausgeführt werden, so daß das Ausmaß des Kriechens und Schrumpfens verringert wird. Das reicht jedoch nicht aus, um die Dichtigkeit an der Einspannstelle des Flansches zu gewährleisten. Deshalb ist gemäß der DE 198 47 294 C2 weiterhin vorgesehen, dem Schrumpfen und Wegbewegen des radial außen liegenden Abschnittes des Flansches dadurch zu begegnen, daß dem Flansch an seinem äußeren Rand noch ein Kragen angeformt wird, welcher in einer Ringnut zwischen dem Ventilgehäuse und dem Druckring zu liegen kommt, um die dort befindliche Materialanhäufung am Kriechen zu hindern. Außerdem ist in dem Flansch, und zwar auf seiner der Sitzringfläche des Ventilgehäuses abgewandten Seite, eine Ringnut vorgesehen, in welcher ein elastisch vorgespannter O - Ring angeordnet ist, welcher die Dichtfläche des Flansches gegen die Ringsitzfläche preßt. Nachteilig dabei ist, daß dieses eine komplizierte Gestalt des Flansches des Faltenbalges erfordert. Außerdem härtet der O - Ring unter der Wärmeeinwirkung des durch das Hubventil fließenden Mediums allmählich aus, verliert seine Elastizität und muß dann ausgetauscht werden.

Der vorliegenden Erfindung liegt die **Aufgabe** zugrunde, aufzuzeigen, wie bei einem gattungsgemäßen Hubventil über längere Zeit eine dichte Einspannung des Flansches eines die Ventilstange umgebenden Balges erzielt werden kann.

Diese Aufgabe wird gelöst durch ein Hubventil mit den im Anspruch 1 angegebenen Merkmalen. Vorteilhafte Weiterbildungen der Erfindung sind Gegenstand der Unteransprüche.

Erfindungsgemäß besteht der Flansch des Balgs wenigstens in seinem eingespannten äußeren Ringabschnitt aus einem Kunststoff, welcher als Füllstoff ein anorganisches Pulver enthält, dessen Teilchen eine Blattstruktur haben. Sie verleihen dem Flansch dort, wo er den Füllstoff enthält, günstige Eigenschaften. Die anorganischen Pulverteilchen vermögen wegen ihrer Blatt- oder Schichtenstruktur eine Rückfederungskraft zu erzeugen, die hauptsächlich in Richtung quer zu den Strukturschichten ausgerichtet ist. In der Richtung, in welcher sich die Strukturschichten erstrecken, wirken die anorganischen Pulverteilchen hingegen versteifend auf die Kunststoffmatrix, in welche sie eingelagert sind. Da die Pulverteilchen infolge ihrer Blattstruktur auch eine vorwiegend plättchenförmige Gestalt haben, orientieren sie sich bevorzugt parallel zur Flanschoberfläche, wobei eine solche Ausrichtung dadurch begünstigt werden kann, daß der Flansch bei der Herstellung aus einer Mischung von pulverförmigem Kunststoff und pulverförmigem Füllstoff im wesentlichen quer zur Erstreckung des Flansches verpreßt und dann gesintert wird.

Durch die erfindungsgemäße Füllung des Flansches oder wenigstens seines eingespannten Ringabschnittes wird deshalb vorwiegend seine Elastizität (Rückstellfähigkeit) quer zur Erstreckung des Flansches vergrößert, während in Richtung der Erstreckung des Flansches dessen Formbeständigkeit bzw. Gestaltfestigkeit verbessert wird, und zwar jeweils dauerhaft. Die verbesserte Gestaltfestigkeit geht einher mit einem verringerten Kriechen des Kunststoffs und die verbesserte Elastizität vergrößert die Rückstellfähigkeit des zwischen einer Ringsitzfläche und dem Druckring eingespannten Ringabschnittes, so daß eine dichte, spaltfreie Anlage des eingespannten Ringabschnitts des Flansches an der konischen Ringsitzfläche des Gehäuses über einen längeren Zeitraum selbst dann gewährleistet ist, wenn unter der gegebenen Vorspannung ein Kriechen des Kunststoffs auftritt, weil der erfindungsgemäß gefüllte Kunststoff dies durch seine verbesserte elastische Rückstellfähigkeit ausgleichen kann, und zwar aufgrund seiner eigenen, ihm innewohnenden Eigenschaften, ohne daß es eines zusätzlichen vorgespannten O - Ringes bedürfte (DE 198 47 294 C2), um den eingespannten Ringabschnitt auch nach einem Kriechen des Kunststoffs noch dicht auf die konische Ringsitzfläche zu drücken. Mit der Erfindung erreicht man im Vergleich zu dem in der DE 198 47 294 C2 offenbarten Ausbildung des Hubventils über längere Zeit eine zuverlässig abgedichtete Einspannung des Flansches des Balges bei gleichzeitig vereinfachtem Aufbau.

Als Füllstoffe eigenen sich vor allem Silikate, welche eine Blattstruktur haben, insbesondere Glimmer. Andere mineralische Stoffe mit Blattstruktur findet man bei teilentwässerten Aluminaten.

Der Füllstoffgehalt liegt im gefüllten Ringabschnitt des Flansches vorzugsweise unter 15 Gew.-%, noch besser unter 10 Gew.-%. Damit ist eine vollständige Ummantelung der Pulverteilchen durch die Kunststoffmatrix gewährleistet, so daß der Flansch trotz der Füllung die hohe chemische Beständigkeit des reinen Kunststoffs zeigt. Die niedrigen Füllstoffgehalte genügen, um die mechanischen und elastischen Eigenschaften des Kunststoffs entscheidend zu verbessern.

Die mittlere Teilchengröße des Füllstoffs liegt vorzugsweise unter 0,5 mm und über 0,1 mm.

Partikel mit einer geschichteten Blattstruktur lassen sich durch Schockverdampfung von zwischen die Schichten eingelagerten Fremdstoffen aufblähen. Werden solche aufgeblähte Partikel mit Blattstruktur als Füllstoffe in den Fluor - Kunststoff eingelagert, dann wirken die aufgeblähten Partikel als Federkörper innerhalb der Kunststoffmatrix und erhöhen deren elastisches Rückstellvermögen. Es ist deshalb besonders vorteilhaft, für Zwecke der Erfindung aufgeblähte Pulverteilchen als Füllstoffe einzusetzen, da sie die Elastizität des Flansches in seinem eingespannten Abschnitt stark verbessern. Auch aufgeblähte Pulverteilchen mit Blattstruktur lassen sich in dem gefüllten Abschnitt des Flansches überwiegend parallel zu dessen Oberfläche ausrichten, wenn man eine Mischung aus dem Kunststoffpulver und dem Füllstoff in einer entsprechenden Form quer zur Erstreckung des Flansches preßt.

Als Kunststoffe eignen sich wegen der chemischen und thermischen Beständigkeit besonders Fluor - Kunststoffe, insbesondere Polytetrafluorethylen (PTFE), und deren Mischungen. PTFE kann mit einem oder mehreren anderen hochschmelzenden thermoplastischen Kunststoffen modifiziert sein und demgemäß z.B. einen Anteil von Polyfluorethylenpropylen (FEP) oder Polytrifluorchlorethylen (PCTFE). Diese schmelzbaren Fluor - Kunststoffe können als Gemisch mit PTFE vorliegen, mit Tetrafluorethylen copolymerisiert sein oder den Fluor - Kunststoff allein (ohne PTFE) bilden. Das PTFE kann aber auch durch andere thermoplastische Kunststoffe modifiziert werden, die bei der Sintertemperatur von PTFE beständig sind, beispielsweise Polyamidimide, Polyimide und Polyetheretherketone.

Geeignete gefüllte Fluor - Kunststoffe und deren Herstellung sind in der EP 0 268 233 B1 offenbart.

Vorzugsweise besteht der Flansch des Balgs aus einem ringförmigen Hauptteil mit einer inneren Mantelfläche und mit einer äußeren Mantelfläche und aus einer von der äußeren Mantelfläche ausgehenden und sie umgebenden, im Radialschnitt abgewinkelten Dichtlippe, welche dünner, vorzugsweise viel dünner ist als der Hauptteil des Flansches. Der dickere Hauptteil des Flansches kann dazu benutzt werden, um ihn mittelbar oder unmittelbar an dem Druckring zu verankern, so daß die beim Öffnen und Schließen des Hubventils im Balg auftretenden Kräfte auf kurzem Wege in den Druckring eingeleitet werden, aber keine Biegemomente auf die Dichtlippe ausüben, so daß diese nicht dicker sein muß, als es ihre alleinige Aufgabe erfordert, die darin besteht, den Ringspalt zwischen dem Druckring und der ihm gegenüberliegenden konischen Ringsitzfläche abzudichten. Die Dichtlippe kann deshalb dort, wo sie eingespannt wird, dünner sein als 2 mm, vorzugsweise dünner als nur 1,5 mm, so daß im Dichtspalt nur wenig Kunststoff vorhanden ist, welcher durch Kriechen oder Schrumpfen die Dichtwirkung beeinträchtigen könnte.

Eine dauerhaft gute Dichtwirkung kann durch eine geeignete geometrische Gestaltung der Dichtlippe und eine komplementäre Gestaltung der konischen Ringsitzfläche und der ihr gegenüberliegenden Fläche des Druckrings begünstigt werden. Deshalb besteht die Dichtlippe vorzugsweise aus einem bezüglich der Ventilstange radial verlaufenden Abschnitt und aus einem daran anschließenden und demgegenüber abgewinkelten Abschnitt, welcher auf seiner Außenseite durch eine erste Kegelstumpfmantelfläche, welche mit der Längsachse der Ventilstange einen Winkel α einschließt, und durch eine Zylindermantelfläche begrenzt ist. Auf seiner Innenseite ist der abgewinkelte Abschnitt durch eine zweite Kegelstumpfmantelfläche begrenzt, deren Winkel β gegen die Längsachse der Ventilstange kleiner ist als α. Das hat zur Folge, daß sich der abgewinkelte Abschnitt der Dichtlippe ausgehend von ihrem äußeren Rand zunächst erweitert und dann gegenüber der konischen Ringsitzfläche wieder verengt, so daß das Material der Dichtlippe, welche im Dichtspalt unter mechanischer Vorspannung steht, im Falle eines Schrumpfens oder Kriechens in Richtung des radialen Abschnitts der Dichtlippe und damit in eine Engstelle des Dichtspaltes geführt wird. Dadurch wird bei einem Kriechen des Werkstoffs die Dichtwirkung tendenziell sogar noch erhöht.

Vorzugsweise ist der Winkel β um 10° bis 30°, insbesondere um ca. 20° kleiner als der Winkel α. Damit läßt sich ein guter Andruck der Dichtlippe an die konische Ringsitzfläche erzielen, welche mit der Längsachse der Ventilstange vorzugsweise einen Winkel zwischen 40° und 50°, insbesondere von 45° einschließt. An der dicksten Stelle ist die Dichtlippe vorzugsweise nicht mehr als 2 mm, noch besser nicht mehr als 1,5 mm dick.

Das Hauptteil des Flansches könnte auf die in der DE 198 47 294 C2 offenbarte Weise an dem Druckring verankert sein, welcher gleichzeitig die Dichtlippe gegen die konische Ringsitzfläche drückt. Günstiger und in der Herstellung einfacher ist es, wenn die innere Mantelfläche des Hauptteils des Flansches mit einem Gewinde versehen ist, in welches ein Gewindering mit einem Außengewinde hineingedreht ist. Ein aus dem Hauptteil des Flansches vorstehender Abschnitt des Gewinderinges kann dann mit seinem Außengewinde in eine Gewindebohrung des Druckrings hineingedreht werden.

Eine andere Möglichkeit besteht darin, den Hauptteil des Flansches unmittelbar in ein Gewinde hineinzudrehen, welches am Druckring vorgesehen ist.

Zweckmäßigerweise verläuft die Grenze zwischen gefülltem und ungefülltem Kunststoff im Hauptteil des Flansches. In diesem Fall ist die sintertechnische Herstellung des Balgs besonders einfach und es ergibt sich eine großflächige Verzahnung zwischen dem gefüllten und dem ungefüllten Kunststoff.

Es ist bekannt, gattungsgemäße Hubventile durch einen Stellantrieb anzutreiben, welcher eine pneumatisch betätigte Kolben - Zylinder - Einheit hat, deren Kolben in Schließrichtung des Hubventils federbelastet ist. Zum Öffnen des Ventils wird der Kolben pneumatisch gehoben, zum Schließen des Ventils hingegen durch die Kraft einer Wendelfeder verschoben. Beim Strecken und Stauchen der Wendelfeder entsteht in dieser eine Torsionskraft, welche den Kolben und mit ihm die Ventilstange zu drehen versucht. Das hat infolge von Reibung zwischen dem Verschlußteil und dem Ventilsitz des Hubventils einen Verschleiß am Verschlußteil zur Folge. Diese vermeidet eine Weiterbildung der Erfindung, in welcher die Ventilstange derart geführt ist, daß sie gegen Drehungen um ihre Längsachse gesichert ist. Das geschieht vorzugsweise dadurch, daß der Kolben der Kolben - Zylinder - Einheit gegen Drehungen gesichert in seinem zylindrischen Gehäuse geführt ist, so daß er keine Drehbewegung auf die Ventilstange übertragen kann. Zu diesem Zweck ist im zylindrischen Gehäuse zweckmäßigerweise eine Führungsstange vorgesehen, besser noch zwei Führungsstangen, welche parallel zur Ventilstange verlaufen und in zu ihnen passenden Führungsbohrungen des Kolbens geführt sind. Eine andere Möglichkeit der Verdrehsicherung besteht darin, daß die Ventilstange im Bereich einer Sichtlaterne, welche zwischen dem Ventilgehäuse und dem Stellantrieb vorgesehen sein kann, ein Langloch hat und daß dieses Langloch von einem Führungsstab durchquert wird, welcher in der Sichtlaterne fest, aber lösbar, diagonal angeordnet ist und so wenig Spiel in dem Langloch hat, daß eine Drehung der Ventilstange wirksam verhindert wird.

Ausführungsbeispiele der Erfindung sind in den beigefügten Zeichnungen dargestellt.
- Figur 1: zeigt einen Längsschnitt durch ein erfindungsgemäßes Hubventil,
- Figur 2: zeigt als Detail in vergrößertem Maßstab die Ausbildung des Flansches des Balgs in dem Hubventil aus Figur 1,
- Figur 3: zeigt den Querschnitt III - III durch das Hubventil in Figur 1,
- Figur 4: zeigt ein gegenüber der Figur 1 abgewandeltes Ausführungsbeispiel eines Hubventils in einem Längsschnitt durch einen Teil des Ventils und
- Figur 5: zeigt als Detail stark vergrößert die Ausbildung des Flansches und seine Verankerung an einem Druckring.

Gleiche und einander entsprechende Teile sind in den beiden Ausführungsbeispielen mit übereinstimmenden Bezugszahlen bezeichnet.

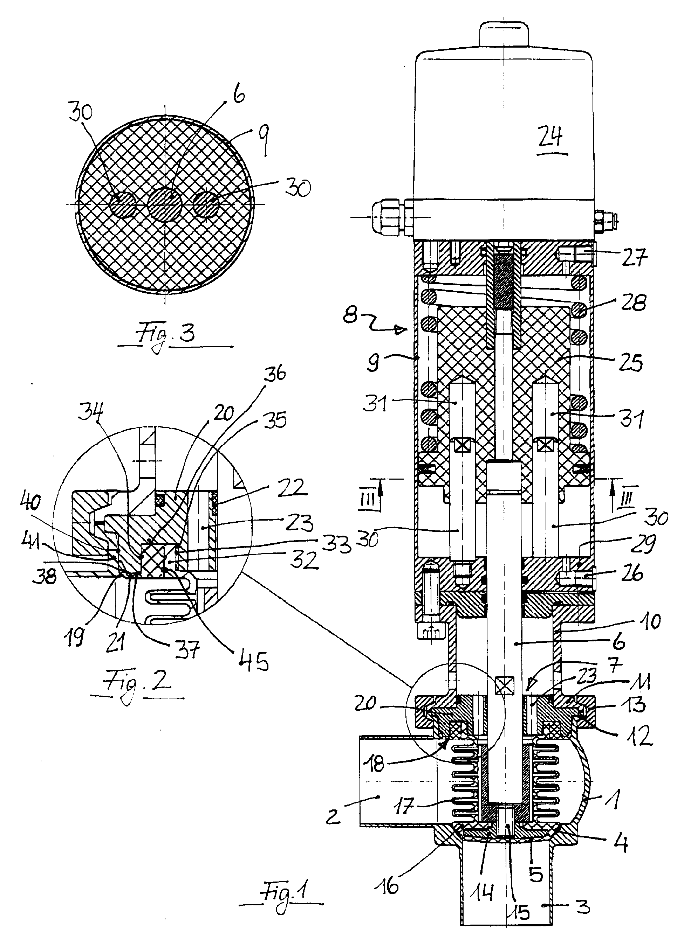

Das in den Figuren 1 bis 3 dargestellte Hubventil hat ein Ventilgehäuse 1 mit einer Eintrittsöffnung 3 und einer Austrittsöffnung 2 und mit einer zwischen der Eintrittsöffnung 3 und der Austrittsöffnung 2 angeordneten konischen Sitzfläche 4, welche mit einem Verschlußteil 5 zusammenwirkt, in welches zu seiner Betätigung eine Ventilstange 6 eingeschraubt ist, welche durch eine der Eintrittsöffnung 2 gegenüberliegende Antriebsöffnung 7 des Ventilgehäuses 1 aus diesem austritt und mit einem Stellantrieb 8 verbunden ist, welcher ein Gehäuse 9 hat, das unter Zwischenfügen einer Sichtlaterne 10 mit dem Ventilgehäuse 1 verbunden ist. Zu diesem Zweck hat die Sichtlaterne 10 an ihrem unteren Ende einen Flansch 11 und das Ventilgehäuse 1 an seiner Antriebsöffnung 7 einen Stutzen 41 mit einem Flansch 12. Die beiden Flansche 11 und 12 sind durch eine Verschlußklammer 13 miteinander verklammert.

In das Verschlußteil 5 ist ein Verstärkungsteil 14 eingebettet, welches eine zentrale Gewindebohrung hat, in welche ein Gewindefortsatz 15 der Ventilstange 6 hineingedreht ist. Das Verstärkungsteil 14 ist in einen Mantel 16 aus Kunststoff eingebettet, welchem einstückig ein Faltenbalg 17 angeformt ist, welcher den unteren Abschnitt der Ventilstange 6 koaxial umgibt. Dem Faltenbalg 17 ist an seinem oberen Ende einstückig ein Flansch 18 angeformt.

Dem Stutzen 41 des Ventilgehäuses 1 ist eine konische Ringsitzfläche 19 angeformt. Von oben her ist in den Stutzen 41 ein Druckring 20 eingesetzt. Der Flansch 18 ist mit einem radial außen liegenden, abgewinkelten Ringabschnitt 21 zwischen der Ringsitzfläche 19 und dem Druckring 20 eingespannt. Der Ringabschnitt 21 ist eine Dichtlippe und dichtet die Antriebsöffnung 7 des Ventilgehäuses 1 nach oben hin ab.

In den Druckring 20 ist ein die Ventilstange 6 führendes Gleitlager 22 eingesetzt. Außerdem enthält der Druckring Bohrungen 23 für eine Leckageanzeige.

Der Stellantrieb 8 umfaßt eine pneumatische Kolben - Zylinder - Einheit, deren Zylinder durch das Gehäuse 9 gebildet wird, und einen auf das Gehäuse 9 aufgesetzten Steuerkopf 24. Im zylindrischen Gehäuse 9 ist ein Kolben 25 verschiebbar gelagert, welcher einseitig mit Druckluft beaufschlagbar ist, nämlich durch eine untere Anschlußbohrung 26. Zum Schließen des Hubventils treibt eine Wendelfeder 28 den Kolben 25 nach unten. Die Wendelfeder 28 hält das Hubventil auch im Falle eines Stromausfalls oder Druckluftausfalls geschlossen. Zum Öffnen des Hubventils wird durch die untere Anschlußbohrung 26 Druckluft in den Zylinder 9 eingeleitet, welche den Kolben 25 gegen die Rückstellkraft der Wendelfeder 28 anhebt. Der Raum über dem Kolben 25 ist über eine Bohrung 27 mit der Atmosphäre verbunden.

In eine das zylindrische Gehäuse 9 nach unten abschließende Wand 29 sind zwei zur Ventilstange 6 parallele Führungsstangen 30 geschraubt, welche sich in entsprechende Führungsbohrungen 31 des Kolbens 25 erstrecken. Sie verhindern, daß eine beim Strecken und Stauchen der Wendelfeder 28 in dieser entstehende Torsionskraft auf den Faltenbalg 17 und das Verschlußteil 5 übertragen wird.

Die Gestalt des Flansches 18, seine Verbindung mit dem Druckring 20 und seine Anordnung zwischen dem Druckring 20 und der ihm gegenüberliegende Ringsitzfläche 21 sind vergrößert als Detail in Figur 2 dargestellt. Daraus ergibt sich, daß der Flansch 18 einen ringförmigen Hauptteil 32 hat, welcher wesentlich dicker ist als die Wandstärke des Faltenbalgs 17 im gefalteten Bereich. Der Hauptteil 32 hat eine innere Mantelfläche 33 und eine äußere Mantelfläche 34, welche im wesentlichen zylindrisch sind. Die äußere Mantelfläche 34 ist mit einem Schraubgewinde 35 versehen. Der Druckring 20 hat an seiner Unterseite eine ringförmige Ausnehmung 36 mit einem Innengewinde, in welches das Hauptteil 32 des Flansches 18 bis zum Anschlag des Flansches an der Unterseite des Druckrings 20 hineingedreht ist. Auf diese Weise ist der Flansch 18 fest am Druckring 20 verankert.

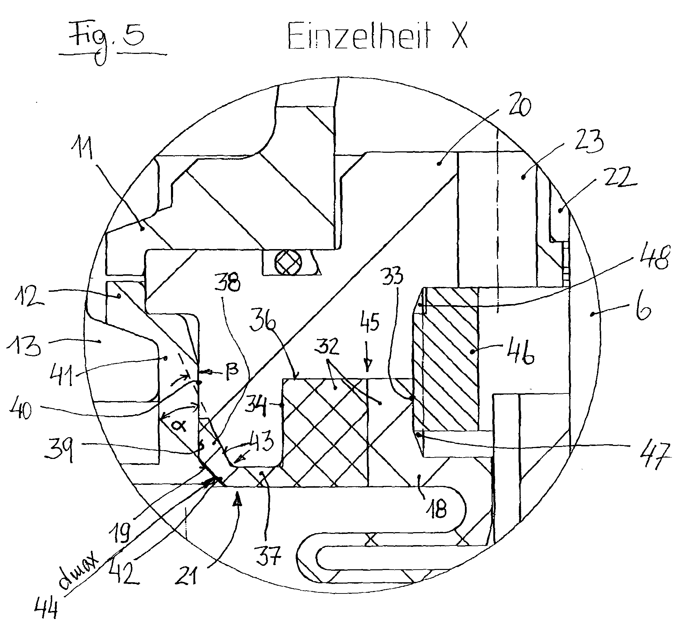

An den Hauptteil 32 des Flansches 18 schließt die Dichtlippe 21 an, welche viel dünner ist als der Hauptteil 32 und aus einem sich radial erstreckendem Abschnitt 37 und einen sich daran anschließenden abgewinkelten Abschnitt 38 besteht. Der radial verlaufende Abschnitt 37 verläuft im rechten Winkel zur Längsachse der Ventilstange 6. Der abgewinkelte Abschnitt 38 der Dichtlippe 21 ist auf seiner Außenseite durch eine zylindrische Mantelfläche 39 begrenzt, welche einer zylindrischen inneren Mantelfläche 40 in dem Stutzen 41 anliegt, in welchen auch der Druckring 20 eingesetzt ist. Zwischen der zylindrischen Mantelfläche 39 und dem radialen Abschnitt 37 der Dichtlippe 21 ist diese auf der Außenseite durch eine erste Kegelstumpfmantelfläche 42 begrenzt, welche einen Winkel α von 45° mit der Längsachse der Ventilstange 6 einschließt. Mit dieser ersten Kegelstumpfmantelfläche 42 liegt die Dichtlippe 21 an der konischen Ringsitzfläche 19 an, welche ebenfalls einen Winkel von 45° der Längsachse der Ventilstange 6 einschließt. Auf der Innenseite ist der abgewinkelte Abschnitt 38 der Dichtlippe 21 durch eine zweite Kegelstumpfmantelfläche 43 begrenzt, welche mit der Längsachse der Ventilstange 6 einen Winkel β = 25° einschließt. Die Gestalt der Dichtlippe 21 ist deutlicher in der Figur 5 zu sehen, welche ein in Gestalt und Anordnung der Dichtlippe 21 in den Figuren 1 und 2 übereinstimmendes Ausführungsbeispiel zeigt.

Der abgewinkelte Abschnitt 38 der Dichtlippe 21 hat seine größte Dicke dₘₐₓ am äußeren Rand der konischen Ringsitzfläche 19. Von da aus verengt sich der abgewinkelte Abschnitt 38 der Dichtlippe 21 in beide Richtungen. Ein Kriechen des Kunststoffs, ausgelöst durch den vom Druckring 20 ausgeübten Druck, läßt das Material der Dichtlippe 21 deshalb bevorzugt in die Engstelle 44 zwischen der Ringsitzfläche 19 und dem gegenüberliegenden Rand des Druckrings 20 fließen und erhöht dadurch tendenziell die Dichtwirkung.

Im übrigen sind die Gestaltfestigkeit und die Elastizität des Flansches 18 dadurch verbessert, daß in den Kunststoff des Flansches 18 radial außerhalb einer Grenzfläche 45, welche keine scharfe Begrenzung darstellen muß, sondern einen Übergangsbereich bilden kann, mit einem Füllstoff gefüllt, welcher aus aufgeblähten Glimmerteilchen mit einer Teilchengröße von kleiner als 0,5 mm besteht, und zwar in einer Menge von weniger als 10 Gew.-% im gefüllten Bereich des Flansches 18. Die Glimmerteilchen sind wenigstens im Bereich der Dichtlippe 21 bevorzugt parallel zur Oberfläche der Dichtlippe 21 in den Kunststoff eingelagert und von diesem vollständig umhüllt. Sie mindern das Ausmaß des Fließens des Kunststoffs und erhöhen seine elastische Rückstellfähigkeit und gewährleisten damit über einen längeren Zeitraum einen dichten Abschluß der Antriebsöffnung 7 am Dichtspalt zwischen der Ringsitzfläche 19 und der ihm anliegenden Dichtlippe 21.

Als Kunststoff wird vorzugsweise PTFE verwendet. Aus PTFE - Pulver kann der Balg 17 samt angeformtem Flansch 18 und angeformtem Verschlußteil 5 einstükkig gesintert werden, wobei in die Sinterform im Bereich außerhalb der Grenzfläche 45 eine Mischung aus PTFE - Pulver und Glimmerpulver eingefüllt und verpreßt wird.

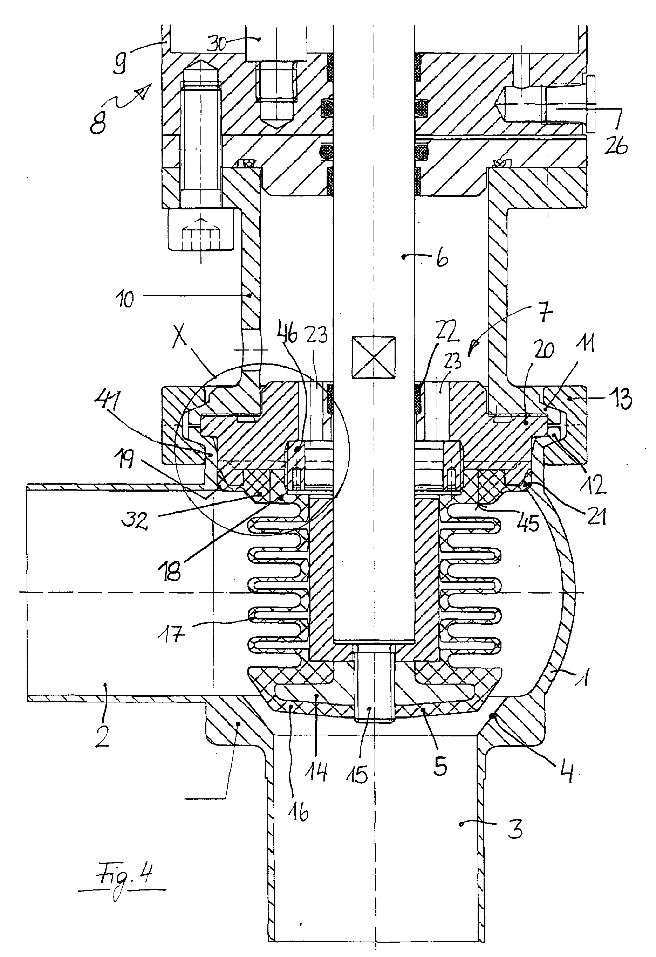

Das in den Figuren 4 und 5 dargestellte Ausführungsbeispiel unterscheidet sich von dem in den Figuren 1 und 2 dargestellten Ausführungsbeispiel darin, daß der Flansch 18 nicht unmittelbar, sondern mittelbar mit dem Druckring 20 verschraubt ist. Zu diesem Zweck ist ein Gewindering 46 vorgesehen, welcher einerseits in eine Gewindebohrung 47 des Flansches 18 und andererseits in eine Gewindebohrung 48 des Druckrings 20 gedreht ist.

## Patentansprüche

1. Hubventil
mit einem Ventilgehäuse (1) mit einer Eintrittsöffnung (3) und mit einer Austrittsöffnung (2) und mit einer zwischen der Eintrittsöffnung (3) und der Austrittsöffnung (2) angeordneten Sitzfläche (4), welche mit einem Verschlußteil (5) zusammenwirkt, an welchem zu seiner Betätigung eine Ventilstange (6) befestigt ist, welche durch eine der Eintrittsöffnung (3) gegenüberliegende Antriebsöffnung (7) des Ventilgehäuses (1) aus diesem austritt und mit einem Stellantrieb (8) verbunden ist,
und mit einem Balg (17), insbesondere als Faltenbalg oder Wellrohr ausgebildet, welcher aus einem Kunststoff hergestellt ist, die Ventilstange (6) umschließt, mit seinem einen Ende vom Verschlußteil (5) ausgeht und an seinem anderen Ende in einen Flansch (18) übergeht,
welcher einerseits mit einem radial außen liegenden Ringabschnitt (21) zur Abdichtung der Antriebsöffnung (7) zwischen einer an der Antriebsöffnung (7) ausgebildeten konischen Ringsitzfläche (19) und einem Druckring (20) eingespannt ist, welcher in die Antriebsöffnung (7) eingesetzt ist,
und welcher andererseits an einem radial weiter innen liegenden Abschnitt (32) axial unverschieblich an dem Druckring (20) gehalten ist, **dadurch gekennzeichnet, daß** der Flansch (18) wenigstens in seinem eingespannten Ringabschnitt (21) aus einem Kunststoff besteht, welcher als Füllstoff ein anorganisches Pulver enthält, dessen Teilchen eine Blattstruktur haben.

2. Hubventil nach Anspruch 1, **dadurch gekennzeichnet, daß** der Kunststoff ein Fluor - Kunststoff, insbesondere Polytetrafluorethylen (PTFE) ist.

3. Hubventil nach Anspruch 1 oder 2, **dadurch gekennzeichnet, daß** der Füllstoff ein Silikat, insbesondere ein Glimmer ist.

4. Hubventil nach Anspruch 1, 2 oder 3, **dadurch gekennzeichnet, daß** der Füllstoffgehalt im gefüllten Ringabschnitt des Flansches (18) unter 15 Gew.-% liegt.

5. Hubventil nach Anspruch 1, 2 oder 3, **dadurch gekennzeichnet, daß** der Füllstoffgehalt im gefüllten Abschnitt des Flansches (18) unter 10 Gew.-% liegt.

6. Hubventil nach einem der vorstehenden Ansprüche, **dadurch gekennzeichnet, daß** die mittlere Teilchengröße des Füllstoffs unter 0,5 mm liegt.

7. Hubventil nach einem der vorstehenden Ansprüche, **dadurch gekennzeichnet, daß** die mittlere Teilchengröße des Füllstoffs über 0,1 mm liegt.

8. Hubventil nach einem der vorstehenden Ansprüche, **dadurch gekennzeichnet, daß** die Pulverteilchen des Füllstoffs aufgebläht sind.

9. Hubventil nach einem der vorstehenden Ansprüche, **dadurch gekennzeichnet, daß** die Pulverteilchen des Füllstoffs in dem gefüllten Ringabschnitt des Flansches (18) überwiegend parallel zur nächstliegenden Oberfläche des Flansches (18) ausgerichtet sind.

10. Hubventil nach einem der Ansprüche 2 bis 9, **dadurch gekennzeichnet, daß** der Fluor - Kunststoff mit einem hochschmelzenden Kunststoff modifiziert ist.

11. Hubventil nach einem der vorstehenden Ansprüche, **dadurch gekennzeichnet, daß** der Flansch (18) aus einem ringförmigen Hauptteil (32) mit einer inneren Mantelfläche (33) und mit einer äußeren Mantelfläche (34) und aus einer von der äußeren Mantelfläche (34) ausgehenden und sie umgebenden, im Radialschnitt abgewinkelten Dichtlippe (21) besteht, welche dünner ist als der Hauptteil (32) des Flansches (18).

12. Hubventil nach Anspruch 11, **dadurch gekennzeichnet, daß** die Dichtlippe (21) viel dünner ist als der Hauptteil (32) des Flansches (18).

13. Hubventil nach Anspruch 11 oder 12, **dadurch gekennzeichnet, daß** die Dichtlippe (21) aus einem bezüglich der Ventilstange (6) radial verlaufenden Abschnitt (37) und aus einem daran anschließenden und demgegenüber abgewinkelten Abschnitt (38) besteht, welcher auf seiner Außenseite durch eine erste Kegelstumpfmantelfläche (42), welche mit der Längsachse der Ventilstange (6) einen Winkel α einschließt, und durch eine Zylindermantelfläche (39) begrenzt ist und welcher auf seiner Innenseite durch eine zweite Kegelstumpfmantelfläche (43) begrenzt ist, deren Winkel β gegen die Längsachse der Ventilstange (6) kleiner ist als α.

14. Hubventil nach Anspruch 13, **dadurch gekennzeichnet, daß** 10° ≤ α - β ≤ 30° ist.

15. Hubventil nach Anspruch 13, **dadurch gekennzeichnet, daß** α - β ∼ 20° ist.

16. Hubventil nach Anspruch 13, 14 oder 15, **dadurch gekennzeichnet, daß** 40° ≤ α ≤ 50° ist.

17. Hubventil nach Anspruch 13, 14 oder 15, **dadurch gekennzeichnet, daß** α ∼ 45° ist.

18. Hubventil nach einem der Ansprüche 13 bis 17, **dadurch gekennzeichnet, daß** der abgewinkelte Abschnitt (38) der Dichtlippe (21) an seiner dicksten Stelle höchstens 2 mm dick ist.

19. Hubventil nach einem der Ansprüche 13 bis 17, **dadurch gekennzeichnet, daß** der abgewinkelte Abschnitt (38) der Dichtlippe (21) an seiner dicksten Stelle höchstens 1,5 mm dick ist.

20. Hubventil nach einem der Ansprüche 11 bis 19, **dadurch gekennzeichnet, daß** die innere Mantelfläche (33) des Hauptteils (32) des Flansches (18) mit einem Gewinde versehen ist, in welche ein Gewindering (46) mit einem Außengewinde eingesetzt ist, und daß dieser Gewindering (16) mit seinem Außengewinde außerdem in eine Gewindebohrung des Druckrings (20) hineingedreht ist.

21. Hubventil nach einem der Ansprüche 11 bis 20, **dadurch gekennzeichnet, daß** die Grenze (45) zwischen gefülltem und ungefülltem Kunststoff im Hauptteil (32) des Flansches (18) verläuft.

22. Hubventil nach einem der vorstehenden Ansprüche, **dadurch gekennzeichnet, daß** die Ventilstange (6) derart geführt ist, daß sie gegen Drehungen um ihre Längsachse gesichert ist.

23. Hubventil nach Anspruch 22, **dadurch gekennzeichnet, daß** der Stellantrieb (8) eine pneumatische Kolben - Zylinder - Einheit mit einem durch eine Wendelfeder (28) belasteten Kolben (25) aufweist und daß die Ventilstange (6) mit ihrem vom Verschlußteil (5) fernliegenden Endabschnitt verdrehfest in dem Kolben (25) der Kolben - Zylinder - Einheit steckt, welcher seinerseits gegen Drehungen gesichert im zylindrischen Gehäuse (9) der Kolben - Zylinder - Einheit geführt ist.

24. Hubventil nach Anspruch 23, **dadurch gekennzeichnet, daß** im zylindrischen Gehäuse (9) mindestens eine, vorzugsweise zwei parallel zur Ventilstange (6) angeordnete Führungsstangen (30) angeordnet sind, welche in dazu passenden Führungsbohrungen (31) des Kolbens (25) geführt sind.

25. Hubventil nach Anspruch 22, **dadurch gekennzeichnet, daß** zwischen dem Stellantrieb (8) und dem Ventilgehäuse (1) eine Sichtlaterne (10) vorgesehen ist, daß die Ventilstange (6) im Bereich der Sichtlaterne (10) ein Langloch hat und daß ein in der Sichtlaterne (10) diagonal angeordneter Führungsstab das Langloch durchquert.
